# EUROPEAN PATENT SPECIFICATION

(11) **EP 0 473 638 B1**
(45) Date of publication and mention of the grant of the patent: **02.02.1994**
(21) Application number: 90907352.0
(22) Date of filing: 22.05.1990
(51) Int. Cl.: H04L 12/54

(54) **APPARATUS FOR FORWARDING A MESSAGE**
MITTEILUNGSWEITERGABEVORRICHTUNG
APPAREIL POUR ENVOYER UN MESSAGE

(30) Priority: 22.05.1989 GB 8911740
(43) Date of publication of application: 11.03.1992
(73) Proprietor: HATTON, Leslie, New Malden KT3 3AJ (GB)
(72) Inventor: HATTON, Leslie, New Malden KT3 3AJ (GB)
(74) Representative: Gordon, Richard John Albert
(86) International application number: GB9000799
(87) International publication number: WO9014726

(56) References cited:
- DE-A- 3 306 706
- GB-A- 2 193 067
- National Telecommunications Conference, NTC 80, Houston, Texas, 30 November - 4 December 1980, Conference Record, vol. 1 of 4, IEEE (New York, US), pages 19.4.1 - 19.4.5; T. Kamae: "Development of a public facsimile communication system using storage and conversion techniques"
- Review of the Electrical Communication Laboratories, vol. 32, no. 6, November 1984 (Tokyo, JP), pages 1036-1043; Y. Sakama et al.: "Multi-media database access services provided through a data communication processing system"

## Description

This invention relates to a system for forwarding a message by way of a communications network.

With the increase in popularity of facsimile machines, technical development has resulted in the provision of such machines which are portable. However, the ability to transport a facsimile machine from one location to another is of little value if it is not possible to establish a communications link between the machine when at any such location and a station at which facsimile messages normally would be received so that such messages may be forwarded to the portable machine.

It is known from GB-A-2193067 and DE-A-3306706 to provide a system for forwarding a message by way of a communications network comprising apparatus including receiving means for receiving the message from a first station, decoding means for decoding the message received by the receiving means, storage means for storing the message decoded by the decoding means and control means for controlling communication with a second station by way of the network.

However, in such known systems there is no indication that the second station may be a portable facsimile machine. Indeed, since in such known systems communication with the second station is effected only if the second station is designated by the first station, this would present a serious disadvantage if the second station were a portable facsimile machine because it would often be that a designation code of the second station would not be contained in a store at the first station.

Therefore the invention is characterised in that the second station is a portable device adapted to be disconnectably connectable with the network and the control means is arranged such that, on receiving a signal from the second station, the message stored in the storage means is transmitted to the second station via the network.

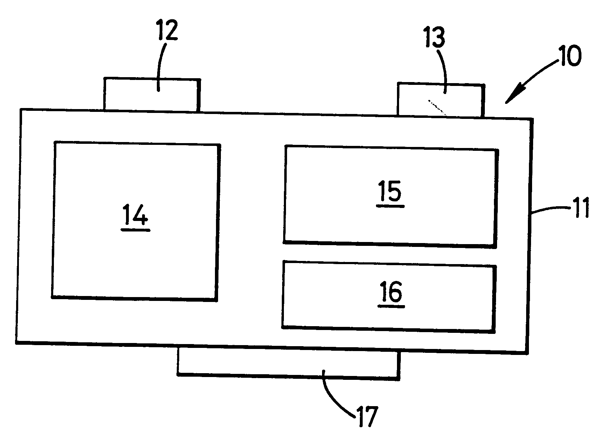

Following is a description, by way of example only and with reference to the accompanying drawing which is a diagrammatic representation, of one method of carrying the invention into effect.

In the drawing there is shown appratus 10 comprising a frame 11 having located thereon a socket 12 for receiving a plug (not shown) of a telecommunications link and a power supply 13. Also located on the frame is a circuit comprising a non volatile battery driven memory 14, an auto-dialling auto-answering modem 15 and a control unit 16, the circuit including the socket 12 and the power supply 13 and including a manually operable control panel 17.

The apparatus is connected to a communications link by inserting the plug in the socket 12. On detecting an incoming facsimile call according to the standard CCITT Groups 2,3 or any other current facsimile standards, the control unit 16 causes the incoming facsimile message to be decoded by the modem 15 and stores the message in the memory 14, which may have the capacity to store many such messages.

Subsequently, the control unit 16 causes the modem 15 to call a forwarding station by way of the communications link, at which station there is located a facsimile machine, and to transmit the message from the memory 14 to the station whereby the message issues as a record generated by the machine.

The control unit 16 is adapted to receive and store signals indicative of the forwarding station and to call the forwarding station on receiving the incoming facsimile call or after a pre-programmed time entered into the control unit 16 by operating the control panel 17.

The control unit 16 also is adapted to delay if communication with the forwarding station cannot be established.

Furthermore, the control unit 16 is adapted to forward any stored messages by way of the communications link to the forwarding station on receiving a signal from that station, information regarding the station having been entered into the control unit 16 by operating the control panel 17.

It will be appreciated that apparatus according to the present invention provides an advantage in that it would make available portable facsimile machines which could be connected to a telecommunications network and arranged to generate a record of a message forwarded thereto by the apparatus.

Furthermore, such apparatus would be inexpensive to manufacture because it would comprise substantially an assembly of standard components and the provision of relatively simple control software. The components would include the modem 15 which would be of a type approved by Authority and the apparatus should, therefore, comply with requirements of the Authority.

It will also be appreciated that apparatus according to the present invention is independent of the state of technology of a local communications network and has the capacity to forward messages to any station which can be called directly, including a station located in a country different from the country in which the apparatus is located.

## Claims

1. A system for forwarding a message by way of a communications network comprising apparatus (10) including receiving means (12) for receiving the message from a first station, decoding means (15) for decoding the message received by the receiving means (12), storage means (14) for storing the message decoded by the decoding means (15) and control means (16) for controlling communication with a second station by way of the network characterised in that the second station is a portable device adapted to be disconnectably connectable with the network and the control means (16) is arranged such that, on receiving a signal from the second station, the message stored in the storage means (14) is transmitted to the second station via the network.

2. A system as claimed in Claim 1 characterised in that the control means (16) is adapted to receive and store signals indicative of the second station.

3. A system as claimed in Claim 2 characterised in that the control means (16) is adapted to transmit the message stored in the storage means (14) after a pre-programmed time.

4. A system as claimed in any one of the preceding claims characterised in that the control means (16) is adapted to delay transmitting the message to the second station if communication with the second station cannot be established.

5. A system as claimed in any one of the preceding claims characterised in that there is provided means (17) for entering in the control means (16) information relating to the second station.

## Patentansprüche

1. System zur Beförderung einer Nachricht durch ein Kommunikationsnetzwerk, das eine Vorrichtung (10) aufweist, die eine Empfangseinrichtung (12) zum Empfang der Nachricht von einer ersten Station, eine Decodiereinrichtung (15) zum Decodieren der von der Empfangseinrichtung (12) empfangenen Nachricht, eine Speichereinrichtung (14) zum Speichern der von der Decodiereinrichtung (15) decodierten Nachricht und eine Steuerungs- bzw. Regelungseinrichtung (16) zum Steuern bzw. Regeln der Kommunikation mit einer zweiten Station durch das Netzwerk enthält,
**dadurch gekennzeichnet,** daß die zweite Station ein tragbares Gerät ist, welches so angeschlossen ist, daß es vom Netzwerk abgetrennt werden kann, und daß die Steuerungs- bzw. Regelungseinrichtung (16) so ausgeführt ist, daß beim Empfang eines Signales von der zweiten Station, die in der Speichereinrichtung (14) gespeicherte Nachricht durch das Netzwerk an die zweite Station übermittelt wird.

2. System nach Anspruch 1,
**dadurch gekennzeichnet,** daß die Steuerungs- bzw. Regelungseinrichtung (16) so ausgeführt ist, daß für die zweite Station vorgesehene Signale empfangen und gespeichert werden.

3. System nach Anspruch 2,
**dadurch gekennzeichnet,** daß die Steuerungs- bzw. Regelungseinrichtung (16) so ausgeführt ist, daß die in der Speichereinrichtung (14) gespeicherte Nachricht nach einer vorher festgelegten Zeit übermittelt wird.

4. System nach einem der vorhergehenden Ansprüche,
**dadurch gekennzeichnet,** daß die Steuerungs- bzw. Regelungseinrichtung (16) so ausgeführt ist, daß die Übermittlung der Nachricht zu der zweiten Station verzögert wird, falls mit der zweiten Station nicht kommuniziert werden kann.

5. System nach einem der vorhergehenden Ansprüche,
**dadurch gekennzeichnet,** daß eine Einrichtung (17) zur Eingabe von Informationen, welche für die zweite Station bestimmt sind, in die Steuerungs- bzw. Regelungseinrichtung (16) vorgesehen ist.

## Revendications

1. Appareil pour envoyer un message par un réseau de communication comportant un appareil (10) pourvu de moyens récepteurs (12) pour recevoir des messages d'une première station, de moyens de décodage (15) pour décoder le message reçu par les moyens récepteurs (12), de moyens de stockage (14) pour stocker le message décodé par les moyens de décodage (15) et de moyens de contrôle (16) pour contrôler la communication avec une seconde station par le réseau, caractérisé en ce que la seconde station est un appareil portable pouvant être indifféremment connecté au réseau et que les moyens de contrôle (16) sont agencés de telle façon, qu'à réception d'un signal de la deuxième station, le message stocké par les moyens de stockage (14) est transmis à la seconde station par le réseau.

2. Appareil selon la revendication 1, caractérisé en ce que les moyens de contrôle (16) peuvent recevoir et stocker les signaux de la seconde station.

3. Appareil selon la revendication 2, caractérisé en ce que les moyens de contrôle (16) peuvent transmettre le message stocké dans les moyens de stockage (14) après une période pré-programmée.

4. Appareil selon l'une quelconque des revendications précédentes, caractérisé en ce que les moyens de contrôle (16) peuvent reporter le moment de transmission du message à la seconde station si la communication avec la seconde station ne peut être établie.

5. Appareil selon l'une quelconque des revendications précédentes, caractérisé en ce que des moyens (17) permettent d'entrer dans les moyens de contrôle (16) des informations relatives à la seconde station.
